# FASCICULE DE BREVET EUROPEEN

(11) **EP 0 953 917 B1**
(45) Date de publication et mention de la délivrance du brevet: **15.06.2005**
(21) Numéro de dépôt: 99401064.3
(22) Date de dépôt: 30.04.1999
(51) Int. Cl.: G06F 13/42

(54) **Bit d'occupation pour circuit tampon de sortie d'interface de mémoire externe**
Belegungsbit für eine Ausgangsschnittstellenpufferschaltung eines externen Speichers
Occupation bit for output interface buffer circuit of external memory

(30) Priorité: 30.04.1998 FR 9805505
(43) Date de publication de la demande: 03.11.1999
(73) Titulaire: STMicroelectronics S.A., 92120 Montrouge (FR)
(72) Inventeur: Agon, François, 75116 Paris (FR); Vos, Mark, 75116 Paris (FR)
(74) Mandataire: Ballot, Paul

(56) Documents cités:
- US-A- 4 739 323
- US-A- 5 521 923
- US-A- 5 546 389

## Description

La présente invention a pour objet un circuit tampon comprenant un circuit tampon de sortie qui permet l'utilisation de différents modes de communication.

Une des applications préférées du circuit tampon selon l'invention est destinée à un usage dans une interface de mémoire externe d'un circuit complexe tel qu'un microprocesseur ou un périphérique quelconque de ce microprocesseur. Cependant, l'invention peut également être mise en oeuvre dans un circuit monolithique comprenant une unité centrale et une interface de mémoire.

Dans la suite de la description, on ne tiendra pas compte de l'éventuelle présence d'une interface assurant la liaison entre l'interface de mémoire externe et le circuit complexe de type microprocesseur ou périphérique.

Les interfaces de mémoire externe à des circuits complexes ont à gérer des communications avec ces circuits complexes dans les deux sens : du microprocesseur ou du périphérique vers l'interface de mémoire externe, et de l'interface de mémoire externe vers le microprocesseur ou le périphérique.

Les communications s'effectuent sous la forme d'échanges d'informations, le plus souvent par l'intermédiaire d'une liaison câblée appelée bus de transmission bi-directionnel. Ces informations peuvent être des adresses mémoires, des données ou encore des instructions de commandes.

A titre illustratif, on peut noter que le document US-5 521 923 décrit un procédé de stockage de données dans une mémoire tampon. Cette mémoire tampon est utilisée pour une transmission asynchrone entre un dispositif d'écriture et un serveur. Les paquets sont organisées en paquets stockés dans plusieurs files logiques de la mémoire tampon en fonction d'un niveau de priorité fixé dans leur entête. Un niveau de priorité est ainsi attribué à chaque file logique. Les cellules mémoires d'une file logique de moindre priorité sont libérées pour mémoriser de nouvelles données lorsque l'unité mémoire est totalement pleine. La mémoire tampon réalise donc un stockage temporaire présentant une perte de données en fonction de leur priorité.

Les informations circulent sous forme de données binaires. Des ensembles de données binaires constituent des mots. Les informations circulent du microprocesseur ou du périphérique vers l'interface de mémoire externe lorsque des requêtes d'accès à une mémoire externe sont émises par le microprocesseur ou par le périphérique.

Les informations circulent de l'interface de mémoire externe vers le microprocesseur ou le périphérique lorsque les réponses appropriées à ces requêtes sont renvoyées par l'interface de mémoire externe. Dans les deux cas, les informations circulent par le moyen du bus de transmission.

L'interface de mémoire externe doit disposer de deux circuits tampons : un circuit tampon d'entrée et un circuit tampon de sortie.

Les requêtes d'accès à la mémoire externe émises par le microprocesseur ou par un périphérique sont stockées dans le circuit tampon d'entrée de l'interface de mémoire externe. Ces requêtes sont alors décodées par l'interface de mémoire externe. On obtient grâce à ce décodage, les adresses mémoires auxquelles on veut accéder, ainsi que le type d'accès requis : il peut s'agir d'un accès en mode écriture ou d'un accès en mode lecture. L'accès réel à la mémoire externe est alors seulement effectif. Dans le cas d'une lecture de la mémoire externe, les mots lus sont stockés dans le circuit tampon de sortie de l'interface de mémoire externe. Ils sont ensuite transmis vers le microprocesseur ou vers un périphérique au moyen du bus de transmission.

La suite de la description fera référence uniquement au circuit tampon de sortie d'une interface de mémoire externe aussi bien dans l'exposé de l'état de la technique que dans le cadre de la présentation de l'invention en elle-même. Il est cependant évident que l'utilisation du circuit tampon selon l'invention peut être étendue à toutes autres interfaces dont les performances peuvent être améliorées par le circuit selon l'invention.

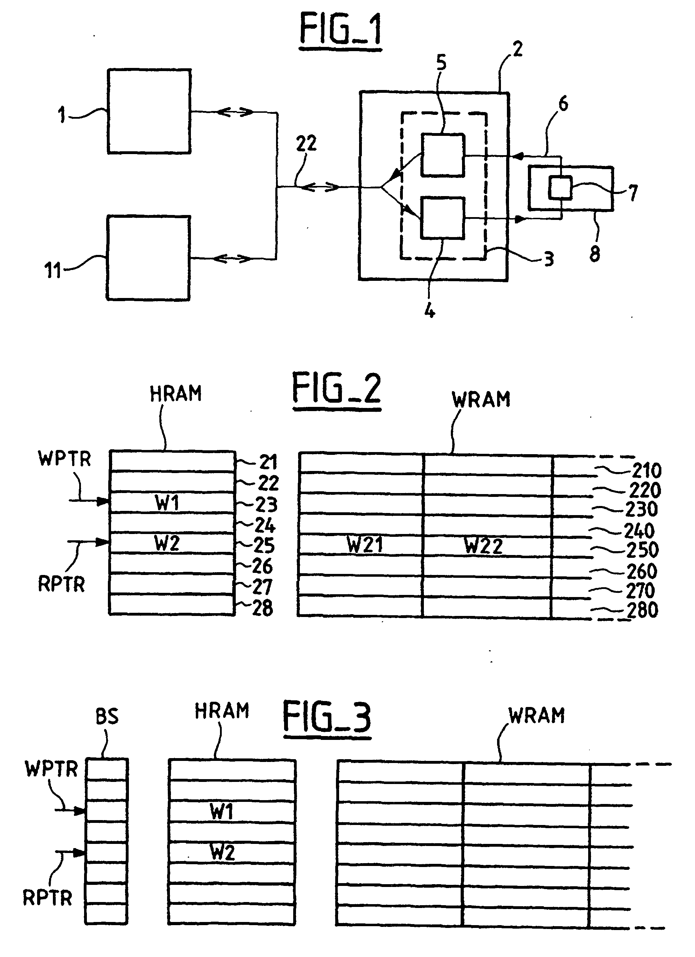

La figure 1 présente un schéma-bloc des éléments essentiels intervenant lors des échanges d'informations entre une interface de mémoire externe et soit un microprocesseur, soit un périphérique de ce microprocesseur.

Un microprocesseur 1 est connecté à une interface de mémoire externe 2 au moyen d'un bus de transmission 22. Le bus de transmission 22 permet également de connecter un périphérique 11 à l'interface de mémoire externe 2. Le bus de transmission 22 achemine les données jusqu'à un circuit tampon 3 de l'interface de mémoire externe 2. Le circuit tampon 3 est constitué d'un circuit tampon d'entrée 4 et d'un circuit tampon de sortie 5. Le circuit tampon d'entrée 4 reçoit les requêtes d'accès du microprocesseur 1 ou du périphérique 11. Le circuit tampon de sortie 5 émet les réponses à ces requêtes après un traitement effectué : un espace mémoire 7 d'une mémoire externe 8 visé par la requête peut être lu, écrit ou effacé grâce à un accès en mémoire 6.

Une requête émise par le microprocesseur ou par un périphérique doit toujours avoir une structure adéquate à un protocole de communication utilisé pour les échanges d'informations entre l'interface de mémoire externe et l'émetteur de la requête. Si la requête n'a pas une structure correcte, elle est rejetée et un mot de réponse signalant l'erreur est renvoyé.

La structure de la requête est, dans la plupart des cas, la suivante : un mot dit mot de communication est tout d'abord émis. Le mot de communication est reçu par le circuit tampon d'entrée de l'interface de mémoire externe. Le mot de communication, ("header" dans la littérature anglaise) contient notamment l'adresse de destination de la mémoire externe visée par la requête, la provenance de la requête, ainsi que le nombre de mots associés en lecture ou en écriture à cette requête.

Dans le cas d'une instruction d'écriture dans la mémoire externe, le mot de communication est suivi des mots à écrire dans la mémoire externe.

De la même façon, lors de la communication entre le circuit tampon de sortie de l'interface de mémoire externe et l'émetteur de la requête, un mot de communication circule. Il contient notamment des bits donnant des informations sur l'adresse de destination où doit être envoyée la réponse à la requête, et le nombre de mots associés à cette requête. Dans le cas d'une requête en lecture de la mémoire externe, les mots associés à la requête suivent le mot de communication.

Il existe plusieurs modes de communication entre le circuit tampon de sortie de l'interface de mémoire externe et le circuit complexe émetteur de la requête.

Les deux principaux modes de communication existants sont les suivants : tout d'abord, il existe une communication dite communication immédiate. Avec la communication immédiate, le bus de transmission, s'il est disponible, est monopolisé par l'interface de mémoire externe dès que le circuit tampon de sortie de l'interface de mémoire externe reçoit le mot de communication qui annonce la réponse à une requête. Le mot de communication de la réponse est une version modifiée du mot de communication de la requête. La version modifiée du mot de communication est transmise du circuit tampon d'entrée au circuit tampon de sortie quand l'accès à la mémoire externe débute. Dans le cas où la requête émise par le microprocesseur ou par le périphérique est une requête contenant une instruction de lecture, les mots lus sont envoyés vers leur destinataire dès leur arrivée dans le circuit tampon de sortie de l'interface de mémoire externe. Ce mode de communication monopolise le bus de communication pendant une durée importante. On parle d'ailleurs de "slow sending" dans la littérature anglaise. Avec ce mode de communication, la réponse à une requête est aussi immédiate que possible. Cette réponse est cependant étalée dans le temps.

Un deuxième mode de communication existe. Ce mode de communication est appelé mode de communication différée. Ce second mode de communication a pour objectif d'occuper le bus de communication le moins longtemps possible. Cet objectif est atteint de la façon suivante : lorsque le mot de communication est écrit dans le circuit tampon de sortie de l'interface de mémoire externe, le bus de communication n'est pas immédiatement monopolisé. En effet, on attend, en mode lecture, que tous les mots à transmettre vers l'unité émettrice de la requête soient écrits dans le circuit tampon de sortie de l'interface de mémoire externe. C'est uniquement lorsque tous les mots concernés par la requête sont écrits dans le circuit tampon de sortie de l'interface de mémoire externe que le bus de communication est monopolisé. La réponse à la requête est ainsi différée dans le temps. Le deuxième mode de communication permet de monopoliser le bus de transmission pendant une plus faible durée. On parle de "fast sending" dans la littérature anglaise.

A ce jour, avec un unique circuit tampon de sortie d'une interface de mémoire externe, un mode de communication doit être définitivement choisi. Toutes les requêtes émises par le microprocesseur ou par un périphérique sont traitées avec l'un de ces deux modes de communication, à savoir la communication différée ou la communication immédiate. Une alternance entre les deux modes de communication n'est pas réalisable.

Une solution envisageable pour obtenir une alternance entre les deux modes de communication serait d'ajouter un second circuit tampon de sortie à l'interface de mémoire externe. Chacun des deux circuits tampons de sortie de l'interface de mémoire externe fonctionnerait alors avec un des deux modes de communication. Mais avec une telle solution, un des deux modes de communication pourrait être de façon aléatoire, privilégié par rapport à l'autre mode de communication. Ceci aurait pour conséquence un remplissage plus important d'un des deux circuits tampons de sortie de l'interface de mémoire externe. Une saturation de la communication interviendrait alors rapidement.

Un but de la présente invention est donc de réaliser un circuit tampon de sortie, notamment d'une interface de mémoire externe, qui permette de transmettre les données lues dans la mémoire externe avec un mode de communication différée ou immédiate selon la provenance de la requête, les divers circuits émettant des requêtes ayant des besoins différents.

Le but de la présente invention est atteint en proposant d'ajouter un bit au mot de communication reçu à chaque requête par le circuit tampon de sortie de l'interface de mémoire externe. Ce bit, dit bit d'occupation, permet de déterminer si les mots lus dans la mémoire externe doivent être envoyés selon le mode de communication différée ou selon le mode de communication immédiate.

Lorsqu'une requête d'accès en lecture à la mémoire externe est émise, cette requête d'accès est traitée par l'interface de mémoire externe. Le circuit tampon de sortie reçoit, comme précédemment, pour chaque requête un mot dit mot de communication. A chaque mot de communication est associé selon l'invention un bit supplémentaire permettant de déterminer le mode de communication qui doit être utilisé pour émettre les données lues dans la mémoire externe. Le bit d'occupation prend la valeur 0 par défaut. Le mode de communication adopté lorsque le bit d'occupation a la valeur 0 est le mode de communication immédiate. Si le bit d'occupation prend la valeur 1, le mode de communication est alors le mode de communication différée. Le bit d'occupation garde la valeur 1 tant que tous les mots lus dans la mémoire externe suite à la requête correspondante ne sont pas stockés dans le circuit tampon de sortie de l'interface de mémoire externe. Lorsque tous les mots sont écrits dans le circuit tampon de sortie de l'interface de mémoire externe, le bit d'occupation reprend alors la valeur 0. La réponse à la requête peut être émise par l'interface de mémoire externe sur le bus de transmission dès que ce dernier est disponible.

L'invention concerne donc un procédé de communication entre un circuit tampon de sortie d'une interface de mémoire externe et un premier et un second circuit électronique, du type consistant à transmettre, sous forme de données binaires groupées en mots, des réponses à des requêtes externes d'accès à une mémoire externe issues du premier ou du second circuit électronique, les réponses aux requêtes débutant par un mot de communication qui est écrit dans une première mémoire interne du circuit tampon de sortie de l'interface de mémoire externe, caractérisé en ce que le mot de communication est associé à un bit d'occupation qui détermine le mode de communication entre le circuit tampon de sortie de l'interface de mémoire externe et le premier ou le second circuit électronique.

Les modes de communication sont la communication immédiate et la communication différée ; dans une application préférée le premier circuit électronique est un microprocesseur ; le second circuit électronique est un périphérique de ce microprocesseur. La communication immédiate est préférée lorsque le destinataire de la communication est le microprocesseur. La communication différée est préférée lorsque le destinataire de la communication est un périphérique du microprocesseur. Toujours dans une application préférée, le mode de communication dépend uniquement du destinataire de la communication.

Les différents aspects et avantages de l'invention apparaîtront plus clairement dans la suite de la description en référence aux figures qui ne sont données qu'à titre indicatif et nullement limitatif de l'invention.

La figure 1, déjà décrite, est un schéma-bloc dès éléments mis en jeu lors des échanges d'informations entre un circuit complexe et une interface de mémoire externe.

La figure 2 montre la structure d'une mémoire interne de l'art antérieur.

La figure 3 montre la structure d'une mémoire interne selon l'invention.

La figure 4 montre un mécanisme d'effacement d'un bit d'occupation.

Le transfert d'informations peut être perturbé pour différentes raisons. Il peut être bloqué pour plusieurs cycles. D'autre part, une réponse à une requête d'accès à la mémoire externe ne peut pas être renvoyée par le bus de transmission si un autre échange d'informations a lieu au même moment sur le bus de transmission. Ces éventualités de perturbation dans les échanges d'informations justifient l'existence d'une mémoire interne dans les circuits tampons d'entrée et de sortie de l'interface de mémoire externe. La mémoire interne est souvent une mémoire de type RAM.

La mémoire interne peut être constituée de deux mémoires internes spécifiques : une première mémoire interne HRAM peut être destinée à stocker uniquement les mots de communication. Une seconde mémoire interne WRAM peut être destinée à stocker les mots chargés dans le circuit tampon de sortie de l'interface de mémoire externe à partir de la mémoire externe. A chaque fois qu'un mot de communication est écrit dans la première mémoire interne HRAM, un pointeur d'écriture WPTR est incrémenté. A chaque fois qu'un mot de communication est envoyé sur le bus de communication, un pointeur de lecture RPTR est incrémenté.

La figure 2 montre la structure d'une mémoire interne destinée à recevoir les mots de communication suite aux requêtes émises par le microprocesseur ou par un périphérique.

Sur la figure 2, une première mémoire interne HRAM est divisée en 8 espaces mémoire 21, 22, 23, 24, 25, 26, 27, 28. La première mémoire interne est destinée à recevoir les mots de communication qui débutent chaque réponse à une requête. A chacun de ces espaces mémoire respectivement 21, 22, 23, 24, 25, 26, 27 et 28 de la première mémoire interne HRAM correspond une ligne de mémoire respectivement 210, 220, 230, 240, 250, 260, 270, 280 d'une seconde mémoire interne WRAM. Chaque ligne de mémoire est composée d'espaces mémoires qui peuvent contenir des mots lus dans la mémoire externe 8 présentée à la figure 1. Un mot de communication W1 est inscrit à l'espace mémoire 23. Il est désigné par un premier pointeur d'écriture WPTR. Le premier pointeur d'écriture WPTR est incrémenté chaque fois qu'un nouveau mot de communication est écrit dans la première mémoire interne HRAM. Un second mot de communication W2 est contenu dans l'espace mémoire 25 de la première mémoire interne HRAM. Il est désigné par un premier pointeur de lecture RPTR, ce qui signifie que le mot de communication W2 va être envoyé sur le bus de transmission 22 ainsi que des mots W21 et W22 écrits dans la ligne de mémoire 250.

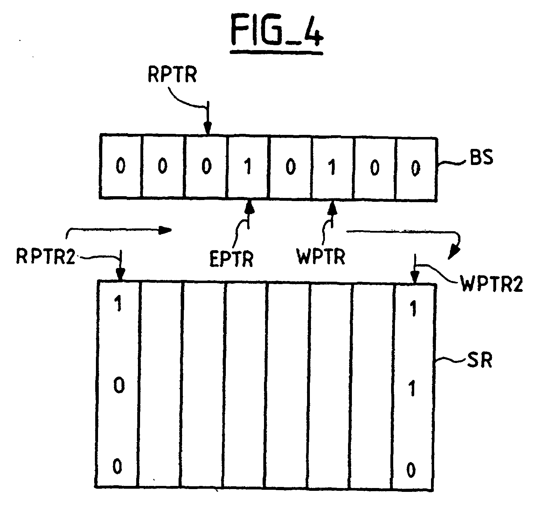

La figure 3 montre la structure d'une mémoire interne selon l'invention. Conformément à ce qui a été décrit à la figure 2, cette mémoire interne est destinée à recevoir les réponses aux requêtes émises par le microprocesseur ou par un périphérique. A la structure décrite à la figure 2, vient s'ajouter un registre supplémentaire BS de mémoire. Ce registre supplémentaire BS de mémoire est divisée en 8 lignes, chaque ligne pouvant contenir un unique bit dit bit d'occupation. Chaque ligne de la colonne supplémentaire BS de mémoire est associée à une ligne de la première mémoire interne HRAM. La valeur du bit d'occupation contenu dans chaque ligne du registre de mémoire supplémentaire BS détermine le mode de communication avec lequel va être envoyée sur le bus de transmission la réponse à la requête concernée.

Chaque bit d'occupation du registre de mémoire supplémentaire BS est par défaut mis à la valeur 0. Le mode de communication utilisé est alors le mode de communication immédiate. Lorsqu'un bit du registre supplémentaire BS de mémoire est mis à la valeur 1, le mode de communication adopté est le mode de communication différée.

Dans ce cas, le bit d'occupation est maintenu à la valeur 1 tant que tous les mots concernés par la requête n'ont pas été lus dans la mémoire externe et stockés dans la seconde mémoire interne WRAM. Lorsque tous les mots concernés par une requête ont été lus dans la mémoire externe, et stockés dans la seconde mémoire interne WRAM, le bit d'occupation concerné reprend alors la valeur 0. La réponse à la requête concernée peut être alors transmise dès que possible au moyen du bus de transmission.

Ainsi dans le cas d'une communication différée, le bit d'occupation prend une première valeur tant que l'ensemble des mots constituant la réponse à une requête n'est pas écrit dans une seconde mémoire interne, le bit d'occupation prend une seconde valeur dès que l'ensemble des mots constituant la réponse à une requête est écrit dans la seconde mémoire interne.

Dans le cas d'une communication immédiate, le bit d'occupation prend la seconde valeur.

Afin de pouvoir effacer le bit d'occupation, il faut avoir noté à quelle position mémoire correspond le bit d'occupation.

Sur la figure 4, qui montre le mécanisme d'effacement du bit d'occupation, un troisième pointeur EPTR pointe sur la colonne supplémentaire BS de mémoire. Le troisième pointeur EPTR est un pointeur d'effacement. Il intervient lorsqu'un bit du registre d'occupation a pris la valeur 1 afin que le mode de communication soit le mode de communication différée et que ce bit d'occupation reprend la valeur 0, tous les mots concernés par la requête ayant été lus dans la mémoire externe. Au moment où le bit d'occupation prend la valeur 1, l'adresse mémoire de ce bit d'occupation est écrite dans un registre de sauvegarde SR au moyen d'un second pointeur d'écriture WPTR2.

Lorsque tous les mots à lire selon une requête ont été écrits dans la seconde mémoire externe WRAM, l'adresse mémoire du bit d'occupation est lue dans le registre de sauvegarde SR au moyen d'un second pointeur de lecture RPTR2. Le pointeur d'effacement EPTR utilise cette adresse mémoire lue dans le registre de sauvegarde SR pour remettre à 0 le bit d'occupation correspondant.

Lorsque plusieurs réponses à des requêtes sont prêtes à être envoyées, c'est la première réponse qui est émise. Cette première réponse correspond à la ligne mémoire correspondant à la plus faible valeur du premier pointeur d'écriture WPTR, sous réserve que le bit d'occupation ait la valeur correspondant au mode de communication immédiate. C'est le pointeur de lecture RPTR qui indique quelle est la réponse à transmettre.

Le registre SR, les pointeurs WPTR, RPTR, WPTR2, RPTR2 et EPTR sont des pointeurs circulaires : ils sont incrémentés jusqu'à une valeur maximale. Ils reprennent alors leur valeur de départ. La présente invention permet donc de disposer de deux modes de communication entre un circuit tampon de sortie d'une interface de mémoire externe et au moins deux unités extérieures. Dans une application préférée, le mode de communication est fonction uniquement de l'unité destinatrice.

Un unique circuit tampon de sortie de l'interface de mémoire externe est utilisé, selon l'invention pour une telle coexistence des deux modes de communication.

## Revendications

1. Procédé de communication entre un circuit tampon de sortie (5) d'une interface de mémoire externe (2) connectée à une mémoire externe et un premier circuit électronique (1) et un second circuit électronique (11), du type consistant à transmettre, sous forme de données binaires groupées en mots, des réponses à des requêtes externes d'accès à la mémoire externe (8) issues du premier ou du second circuit électronique, les réponses aux requêtes débutant par un mot de communication, qui est écrit dans une première mémoire interne (HRAM) du circuit tampon de sortie (5) de l'interface de mémoire externe (2), **caractérisé en ce que** le mode de communication est soit un mode de communication immédiate, soit un mode de communication différée, et **en ce que** le mot de communication est associé à un bit d'occupation qui détermine le mode de communication entre le circuit tampon de sortie (5) et le premier ou le second circuit électronique.

2. Procédé de communication selon la revendication 1, **caractérisé en ce que** le premier circuit électronique (1) est un microprocesseur et le second circuit électronique (11) est un périphérique de ce microprocesseur.

3. Procédé de communication selon la revendication 1 ou 2, **caractérisé en ce que** le mode de communication dépend uniquement du destinataire de la communication.

4. Procédé de communication selon les revendications 2 et 3, **caractérisé en ce que** le mode de communication est un mode de communication immédiate si le destinataire de la communication est le microprocesseur, le mode de communication est un mode de communication différée si le destinataire de la communication est un périphérique du microprocesseur.

5. Procédé de communication selon l'une quelconque des revendications 2 à 4, **caractérisé en ce que**, dans le cas d'une communication différée, le bit d'occupation prend une première valeur tant que l'ensemble des mots constituant la réponse à une requête n'est pas écrit dans une seconde mémoire interne (WRAM), le bit d'occupation prend une seconde valeur dès que l'ensemble des mots constituant la réponse à une requête est écrit dans la seconde mémoire interne.

6. Procédé de communication selon l'une quelconque des revendications 1 à 5 **caractérisé en ce que** dans le cas d'une communication immédiate, le bit d'occupation prend la seconde valeur.

7. Procédé de communication selon l'une quelconque des revendications 1 à 6 **caractérisé en ce qu'**un registre de sauvegarde (SR) permet d'écrire l'adresse mémoire des bits d'occupation ayant la première valeur afin de les faire changer de valeur au moyen d'un pointeur d'effacement (EPTR) dès que l'ensemble des mots constituant la réponse à une requête est écrit dans la seconde mémoire interne (WRAM).

## Patentansprüche

1. Verfahren zur Kommunikation zwischen einem Ausgangs-Zwischenspeicherschaltkreis (5) einer externen Speicherschnittstelle (2), die mit einem externen Speicher verbunden ist, und einem ersten elektronischen Schaltkreis (1) sowie einem zweiten elektronischen Schaltkreis (11), wobei das Verfahren umfaßt:
Übertragen von Antworten auf externe Zugriffsanfragen bezüglich des externen Speichers (8), die von dem ersten oder zweiten elektronischen Schaltkreis ausgegeben wurden, in Form binärer Daten, die in Worte gruppiert sind, wobei die Antworten auf die Anfragen mit einem Kommunikationswort beginnen, das in einen ersten internen Speicher (HRAM) des Ausgangs-Zwischenspeicherschaltkreises (5) der externen Speicherschnittstelle (2) geschrieben wurde, **dadurch gekennzeichnet, daß** der Kommunikationsmodus entweder ein Sofort-Kommunikationsmodus oder ein verzögerter Kommunikationsmodus ist, und daß das Kommunikationsbit einem Belegungsbit zugeordnet ist, welches den Kommunikationsmodus zwischen dem Ausgangs-Zwischenspeicherschaltkreis (5) und dem ersten oder zweiten elektronischen Schaltkreis festlegt.

2. Verfahren zur Kommunikation nach Anspruch 1, **dadurch gekennzeichnet, daß** der erste elektronische Schaltkreis (1) ein Mikroprozessor ist und der zweite elektronische Schaltkreis eine Periphereinheit dieses Mikroprozessors ist.

3. Verfahren zur Kommunikation nach Anspruch 1 oder 2, **dadurch gekennzeichnet, daß** der Kommunikationsmodus nur von dem Kommunikationsziel abhängt.

4. Verfahren zur Kommunikation nach den Ansprüchen 2 und 3, **dadurch gekennzeichnet, daß** der Kommunikationsmodus ein Sofort-Kommunikationsmodus ist, wenn das Ziel der Kommunikation der Mikroprozessor ist, und ein verzögerter Kommunikationsmodus ist, wenn das Ziel der Kommunikation ein Peripherieelement des Mikroprozessors ist.

5. Verfahren zur Kommunikation nach einem der Ansprüche 2 bis 4, **dadurch gekennzeichnet, daß** im Falle einer verzögerten Kommunikation das Belegungsbit einen ersten Wert annimmt, wenn die Wortgruppe, welche die Antwort auf eine Anfrage darstellt, nicht in einen zweiten internen Speicher (WRAM) geschrieben wurde, und das Belegungsbit einen zweiten Wert annimmt, wenn die Wortgruppe, welche die Antwort auf eine Anfrage darstellt, in dem zweiten internen Speicher geschrieben wurde.

6. Verfahren zur Kommunikation nach einem der Ansprüche 1 bis 5, **dadurch gekennzeichnet, daß** das Belegungsbit im Falle einer Sofort-Kommunikation den zweiten Wert annimmt.

7. Verfahren zur Kommunikation nach einem der Ansprüche 1 bis 6, **dadurch gekennzeichnet, daß** ein Sicherungsregister (SR) das Beschreiben der Speicheradresse der Belegungsbits zuläßt, die den ersten Wert haben, um deren Wert mittels eines Löschzeigers (EPTR) ändern zu können, wenn die Wortgruppe, welche die Antwort auf eine Anfrage darstellt, in den zweiten internen Speicher (WRAM) geschrieben wurde.

## Claims

1. A method of communication between an output buffer circuit (5) of an external memory interface (2) connected to an external memory and a first electronic circuit (1) and a second electronic circuit (11), of the type comprising transmitting, in the form of binary data grouped into words, answers to external requests for access to the external memory (8) output from the first or the second electronic circuit, the answers to the requests beginning with a communication word which is written in a first internal memory (HRAM) of the output buffer circuit (5) of the external memory interface (2), **characterised in that** the communication mode is either an immediate communication mode or a delayed communication mode, and **in that** the communication word is associated with an occupation bit which determines the communication mode between the output buffer circuit (5) and the first or second electronic circuit.

2. A method of communication according to claim 1, **characterised in that** the first electronic circuit (1) is a microprocessor and the second electronic circuit (11) is a peripheral of said microprocessor.

3. A method of communication according to claim 1 or 2, **characterised in that** the communication mode depends solely on the communication addressee.

4. A method of communication according to claims 2 and 3, **characterised in that** the communication mode is an immediate communication mode if the communication addressee is the microprocessor, the communication mode is a delayed communication mode if the communication addressee is a peripheral of the microprocessor.

5. A method of communication according to any one of claims 2 to 4, **characterised in that** in the case of a delayed communication the occupation bit assumes a first value as long as the group of words forming the answer to a request is not written in a second internal memory (WRAM), the occupation bit assumes a second value as soon as the group of words constituting the answer to a request is written in the second internal memory.

6. A method of communication according to any one of claims 1 to 5, **characterised in that** in the case of immediate communication, the occupation bit assumes the second value.

7. A method of communication according to any one of claims 1 to 6, **characterised in that** a safeguard register (SR) enables the memory address of the occupation bits having the first value to be written so that their value can be changed by means of an erase cursor (EPTR) as soon as the group of words constituting the answer to a request is written in the second internal memory (WRAM).
